# EUROPEAN PATENT APPLICATION

(11) **EP 3 396 212 A1**
(43) Date of publication of application: **31.10.2018**
(21) Application number: 16878474.2
(22) Date of filing: 13.12.2016
(51) Int. Cl.: F16H 57/04

(54) **OIL RECEIVER AND METHOD FOR MANUFACTURING OIL RECEIVER**

(30) Priority: 24.12.2015 JP 2015251750
(71) Applicant: Aisin AI Co., Ltd., Nishio-shi, Aichi 445-0006 (JP)
(72) Inventor: ICHIKAWA, Masaya, Nishio-shi, Aichi 445-0006 (JP); OSAWA, Hideya, Nishio-shi, Aichi 445-0006 (JP)
(74) Representative: TBK
(86) International application number: PCT/JP2016/087061
(87) International publication number: WO 2017/110583

(57) **Abstract**

To provide an oil receiver for a transmission capable of efficiently capturing a part of oil falling downward from above and a part of oil scattered upward from below with a simple configuration. The oil receiver includes a capture portion which captures oil and leads the oil to a gutter portion. The capture portion includes a first lower eave portion which is formed in a plate shape extending upward as it goes in a first width direction, a first upper eave portion which includes a first main body portion formed in a plate shape extending upward as it goes in the first width direction and is formed so that one end of a second width direction side of the first main body portion is separated from the first lower eave portion inside a vertical range above an upper surface of the first lower eave portion, the second width direction being a direction opposite to the first width direction in the width direction, and a first connection portion which connects a part of an end of the second width direction side of the first main body portion to a part of the upper surface of the first lower eave portion.

## Description

### Technical Field

The present invention relates to an oil receiver, specifically, an oil receiver used for a transmission and an oil receiver manufacturing method.

### Background Art

As one type of an oil receiver for a transmission, one described in Patent Literature 1 is known. An oil receiver 1 of Patent Literature 1 includes an upper oil collection chamber 1a and a lower oil collection chamber 1b as illustrated in Fig. 2 of Patent Literature 1. The upper oil collection chamber 1a is formed to have a U-shaped cross-section opened upward and captures a part of oil scooped up by a gear and falling downward from above. The lower oil collection chamber 1b captures a part of oil scooped up by a gear and scattered from below to above.

### Citation List

### Patent Literature

PTL 1: JP-A-2010-286030

### Summary of Invention

### Technical Problem

However, since the lower oil collection chamber 1b of the oil receiver of Patent Literature 1 is opened toward the left side of Fig. 2 of Patent Literature 1, it is considered that the efficiency of capturing oil scattered from below to above is relatively low. Further, there is a demand that the oil receiver needs to have a simple configuration to decrease cost.

Here, the present invention has been made to solve the above-described problems and an object of the invention is to provide an oil receiver for a transmission capable of efficiently capturing a part of oil falling from above to below relative to the oil receiver and a part of oil scattered from below to above relative to the oil receiver with a simple configuration.

### Solution to Problem

In order to solve the above-described problems, an oil receiver according to claim 1 is an oil receiver which is disposed inside a casing of a transmission of a vehicle and captures oil scooped up by the rotation of a gear provided inside the transmission, the oil receiver including: a gutter portion which is formed to have a U-shaped cross-section opened upward in a vertical direction and to extend in a first direction and includes a bottom portion for allowing the oil to flow thereon and a first side wall portion and a second side wall portion extending upward from both ends of the bottom portion in a width direction; and a capture portion which captures the oil and leads the oil to the gutter portion, in which the capture portion includes: a first lower eave portion which is formed in a plate shape including an upper surface and a lower surface and is formed to extend upward from an upper end portion of one of the first side wall portion and the second side wall portion as it goes in a first width direction that is a direction from the other of the first side wall portion and the second side wall portion to one thereof in the width direction; a first upper eave portion which includes a first main body portion formed in a plate shape including an upper surface and a lower surface and extending upward as it goes in the first width direction and is formed so that one end of a second width direction side of the first main body portion is separated from the first lower eave portion inside a vertical range above the upper surface of the first lower eave portion, the second width direction being a direction opposite to the first width direction in the width direction, and one end of the first width direction side of the first main body portion is located in the first width direction beyond the first lower eave portion; and a first connection portion which connects a part of the one end of the second width direction side of the first main body portion of the first upper eave portion to a part of the upper surface of the first lower eave portion.

### Advantageous Effects of Invention

Accordingly, a part of the oil falling downward from the upper side of the capture portion is captured by the upper surface of the first upper eave portion, flows to one end of the second width direction side of the first upper eave portion along the upper surface of the first upper eave portion, falls along the first connection portion or from one end of the second width direction side of the first upper eave portion to reach the upper surface of the first lower eave portion, and is led to the bottom portion of the gutter portion from the upper surface of the first lower eave portion. Further, a range of the lower surface of the first upper eave portion beyond the first lower eave portion in the first width direction captures a part of the oil scattered upward from the lower side of the capture portion. Since the lower surface of the first upper eave portion faces downward, the oil is efficiently captured compared to a case where a portion for capturing the oil is provided to face the lateral side as in the related art. The oil which is captured by the lower surface of the first upper eave portion flows to one end of the second width direction side of the first upper eave portion along the lower surface of the first upper eave portion and reaches the upper surface of the first lower eave portion as described above so that the oil is led to the bottom portion of the gutter portion. Then, since each eave portion is formed in a plate shape, the capture portion can be formed with a relatively simple configuration. Thus, the oil receiver can efficiently capture a part of oil falling downward from the upper side of the oil receiver and a part of oil scattered upward from the lower side of the oil receiver with a simple configuration.

### Brief Description of Drawings

[Fig. 1] Fig. 1 is an axial cross-sectional view of a transmission in a first embodiment of the invention.
[Fig. 2] Fig. 2 is a cross-sectional view of the transmission taken along a line II-II illustrated in Fig. 1.
[Fig. 3] Fig. 3 is a side view of an oil receiver illustrated in Fig. 1.
[Fig. 4] Fig. 4 is a partially enlarged top view of the oil receiver illustrated in Fig. 1.
[Fig. 5] Fig. 5 is a cross-sectional view of the oil receiver taken along a line V-V illustrated in Fig. 4.
[Fig. 6] Fig. 6 is a cross-sectional view illustrating a state where the oil receiver illustrated in Fig. 5 is inclined in a first inclination direction.
[Fig. 7] Fig. 7 is a cross-sectional view of a die for the oil receiver taken along a line corresponding to the line V-V illustrated in Fig. 4.
[Fig. 8] Fig. 8 is a partially enlarged cross-sectional view of a transmission in a second embodiment of the invention.

### Description of Embodiments

### (First Embodiment)

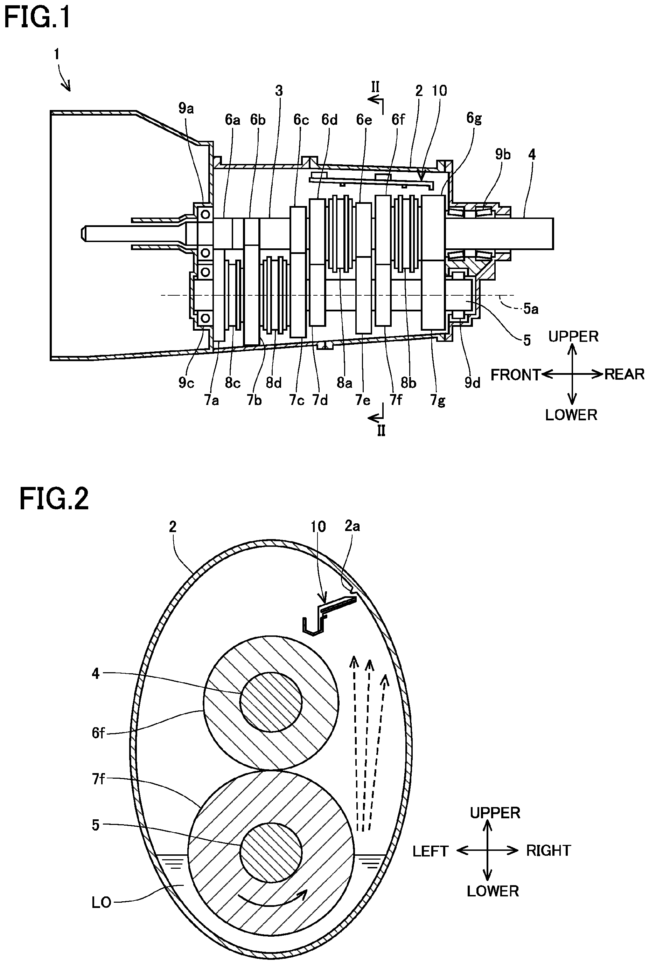

Hereinafter, a first embodiment of an oil receiver according to the invention will be described with reference to the drawings. The oil receiver is attached to a transmission 1 of a vehicle (not illustrated). The transmission 1 is a manual transmission (MT: Manual Transmission) in which one of gear shift stages having six forward speed and one reverse speed are manually selected. Additionally, in the present specification, for convenience of description, a description will be made on the assumption that the upper side and the lower side of Fig. 1 are respectively set to the upper side and the lower side of the transmission 1, the left side and the right side of the same drawing are respectively set to the front side and the rear side of the transmission 1, and the rear side and the front side of the same drawing are respectively set to the right side and the left side of the transmission 1. Further, Figs. 1 to 8 illustrate arrows indicating respective directions.

The transmission 1 is attached so that the upper side of the transmission 1 becomes the upper side in the vertical direction while the vehicle is stopped on a horizontal plane. The transmission 1 includes, as illustrated in Fig. 1, a casing 2, an input shaft 3, an output shaft 4, a counter shaft 5, a reverse drive gear 6a, six drive gears 6b, 6c, 6d, 6e, 6f, and 6g, a reverse driven gear 7a, six driven gears 7b, 7c, 7d, 7e, 7f, and 7g, four selection mechanisms 8a, 8b, 8c, and 8d, an oil receiver 10.

The input shaft 3 is attached to the inside of the casing 2 through a bearing 9a to be rotatable so that an axial direction thereof is aligned to a longitudinal direction. A driving force is input from an engine (not illustrated) to the input shaft 3. The output shaft 4 is attached to the inside of the casing 2 through a bearing 9b to be coaxial to and rotatable relative to the input shaft 3. Further, the output shaft 4 is coupled to the input shaft 3 by the later-described second selection mechanism 8b so as not to be relatively rotatable. A driving force is output from the output shaft 4 to a drive wheel (not illustrated). The counter shaft 5 is rotatably attached to the inside of the casing 2 through bearings 9c and 9d in parallel to and below the input shaft 3.

The reverse drive gear 6a and the first to fifth drive gears 6b, 6c, 6d, 6e, and 6f are disposed on the input shaft 3 in order from the front side. The reverse drive gear 6a, the first drive gear 6b, and the second drive gear 6c are fixed to the input shaft 3 so as not to be relatively rotatable (so that free rotation is not possible). The third to fifth drive gears 6d, 6e, and 6f are rotatably mounted on the input shaft 3 (so that free rotation is possible). The sixth drive gear 6g is fixed to the output shaft 4 so as not to be relatively rotatable.

The reverse driven gear 7a and the first to sixth driven gears 7b, 7c, 7d, 7e, 7f, and 7g are disposed on the counter shaft 5 in order from the front side. The reverse driven gear 7a and the first and second driven gears 7b and 7c are rotatably mounted on the counter shaft 5. The third to sixth driven gears 7d, 7e, 7f, and 7g are fixed to the counter shaft 5 so as not to be relatively rotatable.

The drive gears 6b to 6g engage respectively with the driven gears 7b to 7g corresponding to the drive gears 6b to 6g to form a transmission gear train. The reverse drive gear 6a engages with the reverse driven gear 7a through an idle gear (not illustrated). The reverse drive gear 6a, the reverse driven gear 7a, and the idle gear are gears for reverse stage.

The first selection mechanism 8a connects the selected one of the third drive gear 6d and the fourth drive gear 6e to the input shaft 3 so as not to be relatively rotatable. The second selection mechanism 8b connects the selected one of the fifth drive gear 6f and the output shaft 4 to the input shaft 3 so as not to be relatively rotatable. The third selection mechanism 8c connects the reverse driven gear 7a to the counter shaft 5 so as not to be relatively rotatable. The fourth selection mechanism 8d connects the selected one of the first driven gear 7b and the second driven gear 7c to the counter shaft 5 so as not to be relatively rotatable. Each of the selection mechanisms 8a to 8d is driven by the operation of a shift fork (not illustrated) based on the operation of a shift lever (not illustrated) by a user.

Further, oil (lubricating oil) LO is stored in a bottom portion inside the casing 2 as illustrated in Fig. 2. The amount of the oil LO is an amount in which an oil level is substantially located at the height of the axis 5a (see Fig. 1) of the counter shaft 5 while the vehicle is stopped. The oil LO is scooped up in the casing 2 from the bottom portion inside the casing 2 (see the dashed arrow) by the rotation of the reverse driven gear 7a and each of the driven gears 7b to 7g in a direction indicated by the solid arrow.

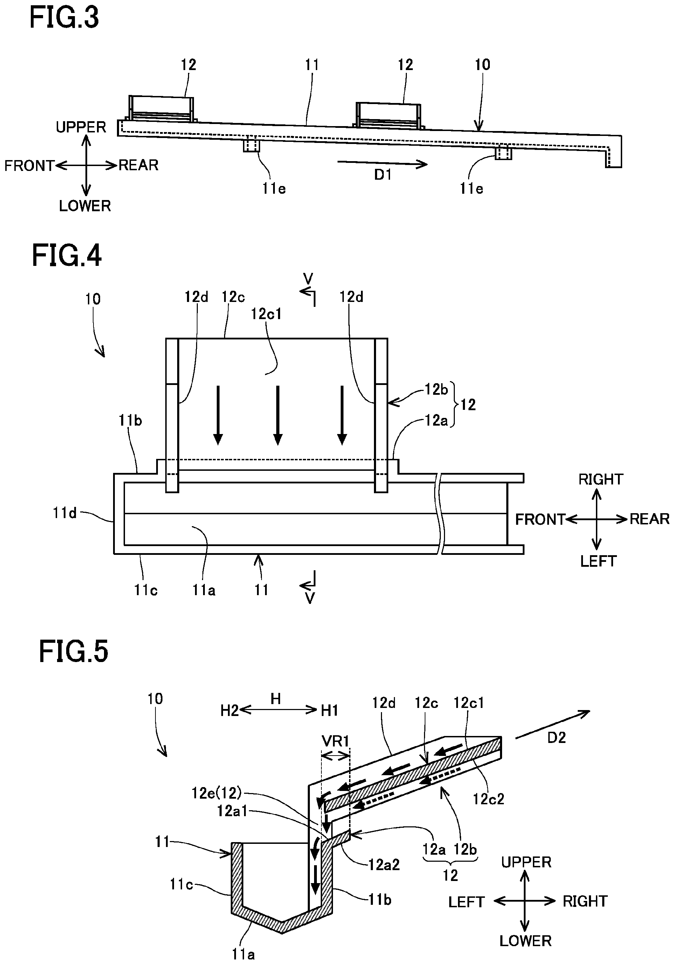

The oil receiver 10 is disposed inside the casing 2 and is used to capture the oil LO scooped up by the rotation of the reverse driven gear 7a and each of the driven gears 7b to 7g. The oil receiver 10 directly or indirectly leads the captured oil LO to the lubrication portion of the transmission 1. The lubrication portion is, for example, a sliding portion of the first and second selection mechanisms 8a and 8b and the bearings 9a and 9b. The oil receiver 10 is attached to the upper right side inside the casing 2 so that a longitudinal direction thereof is aligned to the longitudinal direction (see Figs. 1 and 2). Hereinafter, the oil receiver 10 will be described in a state where the oil receiver is attached to the casing 2. The oil receiver 10 includes, as illustrated in Figs. 3 to 5, a gutter portion 11 and a capture portion 12. The gutter portion 11 and the capture portion 12 are integrally formed with each other.

The gutter portion 11 is a portion in which the captured oil LO flows. The gutter portion 11 is formed to extend in the first direction D1. The first direction D1 is a direction going slightly downward as it goes from the front side to the rear side in the longitudinal direction. Further, the gutter portion 11 is formed to be bent downward at the rear end portion. Accordingly, the oil LO flows by its own weight through the bottom portion 11a in the first direction D1 and is led to the lower side at the rear end portion of the gutter portion 11. The gutter portion 11 includes a bottom portion 11a, a first side wall portion 11b, a second side wall portion 11c, a third side wall portion 11d, and two oil outlets 11e.

As illustrated in Figs. 4 and 5, the bottom portion 11a is a portion which is formed to have a U-shaped cross-section opened upward in the vertical direction (see Fig. 5) and is formed to extend in the first direction D1 so that the oil LO flows therein.

The first side wall portion 11b and the second side wall portion 11c are formed to extend upward (in the first embodiment, upward direction) from both ends of the bottom portion 11a in the width direction H. In the first embodiment, the width direction H of the bottom portion 11a is the horizontal direction. The first side wall portion 11b is formed to extend in the first direction D1 at the right end of the bottom portion 11a in the width direction H. The second side wall portion 11c is formed to extend in the first direction D1 at the left end of the bottom portion 11a in the width direction H.

The third side wall portion 11d is formed to extend upward from the front end of the bottom portion 11a. The right end of the third side wall portion 11d is connected to the front end of the first side wall portion 11b. The left end of the third side wall portion 11d is connected to the front end of the second side wall portion 11 c. That is, a U-shaped portion is formed in the top view by the side wall portions 11b, 11c, and 11d to be opened backward (see Fig. 4).

The oil outlet 11e leads the oil LO flowing in the bottom portion 11a toward the lower side. Specifically, the oil outlet 11e is formed to be opened downward from the inside of the gutter portion 11. In the first embodiment, the two oil outlets 11e are formed so as to be located above the first and second selection mechanisms 8a and 8b in a state where the oil receiver 10 is attached to the transmission 1. In this way, the gutter portion 11 is formed without an undercut shape in the vertical direction. The undercut shape is a convex shape or a concave shape of a molded product which disturbs an operation of opening and closing a later-described die K which is used for injection-molding.

The capture portion 12 is a portion which captures the oil LO and leads the oil to the gutter portion 11. The capture portion 12 is formed at a position not to interfere with a member constituting the transmission 1 such as a shift fork (not illustrated). Specifically, the capture portion 12 is formed at the right side of the front end portion of the gutter portion 11 and the right side of the center portion in the longitudinal direction. The capture portion 12 includes, as illustrated in Figs. 4 and 5, a first lower eave portion 12a, a first upper eave portion 12b, and a first connection portion 12e.

The first lower eave portion 12a is formed in a plate shape including an upper surface 12a1 and a lower surface 12a2 and is formed to extend from the upper end portion of the first side wall portion 11b in the second direction D2 (in the first embodiment, the oblique right upward direction) which moves upward as it goes in the first width direction H1 (in the first embodiment, the right direction) that is a direction from the second side wall portion 11c to the first side wall portion 11b in the width direction H (the horizontal direction) of the bottom portion 11a. Further, each of the side surfaces (the side surfaces of the front end, the rear end, and the right end) of the first lower eave portion 12a is formed in a shape along the vertical direction.

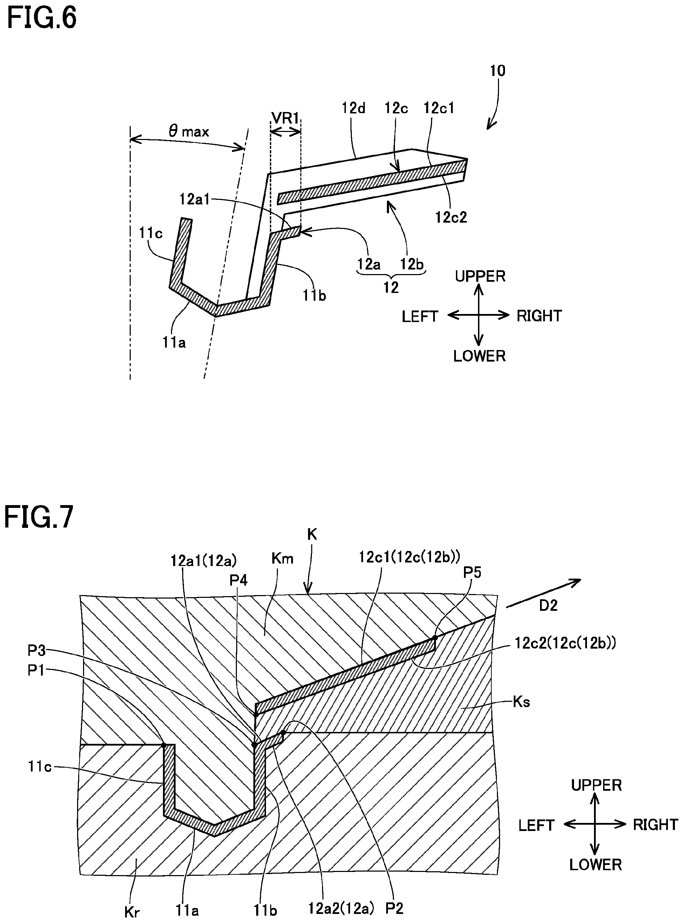

Further, the length of the first lower eave portion 12a in the width direction H (the horizontal direction) of the bottom portion 11a is so set that one end of the second width direction H2 (the left direction) side of the later-described first upper eave portion 12b is located inside the vertical range VR1 above the upper surface 12a1 of the first lower eave portion 12a in a state where the inclination direction of the vehicle is the first inclination direction (in the first embodiment, the right direction) that is a direction in which the first side wall portion 11b is located at the lower side in relation to the second side wall portion 11c in the width direction H (the horizontal direction) of the bottom portion 11a and the inclination angle of the vehicle is the maximum inclination angle θmax in the first inclination direction (see Fig. 6). Further, in this state, it is formed so that one right end of the first lower eave portion 12a is located at the upper side in relation to one left end thereof (see Fig. 6).

The first upper eave portion 12b includes a first main body portion 12c and a main body side wall portion 12d.

The first main body portion 12c includes an upper surface 12c1 and a lower surface 12c2 and is formed in a plate shape extending upward as it goes in the first width direction H1 (the right direction). The first main body portion 12c is formed to extend in the second direction D2 in parallel to the first lower eave portion 12a. One end of the first main body portion 12c of the second width direction H2 (the left direction) side opposite to the first width direction H1 (the right direction) side in the width direction H (the horizontal direction) is located to be separated from the first lower eave portion 12a inside the vertical range VR1 above the upper surface 12a1 of the first lower eave portion 12a and one end of the first main body portion 12c of the first width direction H1 (the right direction) side is located beyond the first lower eave portion 12a in the first width direction H1 (the right direction). In the first embodiment, one end portion (the lower end portion) of the second width direction H2 (the left direction) side of the first main body portion 12c is located to be separated from the first lower eave portion 12a inside the vertical range VR1 above the upper surface 12a1 of the first lower eave portion 12a. Further, in a state where the inclination direction of the vehicle is the first inclination direction (in the first embodiment, the right direction) and the inclination angle of the vehicle is the maximum inclination angle θmax in the first inclination direction, it is formed so that one right end of the first upper eave portion 12b is located at the upper side in relation to one left end thereof (see Fig. 6).

The main body side wall portion 12d is formed to extend upward and downward from the front end and the rear end of the first main body portion 12c. Further, the longitudinal length of the first upper eave portion 12b is set to be shorter than the longitudinal length of the first lower eave portion 12a. Further, the left end and the right end of the first upper eave portion 12b are formed in a shape along the vertical direction.

The first connection portion 12e is provided to connect a part of an end of the second width direction H2 (the left direction) side of the first main body portion 12c of the first upper eave portion 12b to a part of the upper surface 12a1 of the first lower eave portion 12a. Specifically, the first connection portion 12e is formed in a plate shape which extends downward from one end of the second width direction H2 (the left direction) side of the main body side wall portion 12d. That is, the first connection portion 12e connects each longitudinal end of the second width direction H2 (the left direction) side of the first main body portion 12c to a part of the upper surface 12a1. Further, each of the side surfaces (the side surfaces of the front end, the rear end, the right end, and the left end) of the first upper eave portion 12b is formed in a shape along the vertical direction.

Further, as illustrated in Fig. 2, the casing 2 is provided with a protrusion portion 2a which is located on the first width direction H1 (the right direction) upper side of the capture portion 12.

In this way, the side surfaces of the left end and the upper portion from the upper surface 12c1 of the first upper eave portion 12b of the capture portion 12 are formed in a shape without an undercut shape in the vertical direction. Further, a portion between the upper surface 12a1 of the first lower eave portion 12a and the upper surface 12c1 of the first upper eave portion 12b of the capture portion 12 is formed without an undercut shape in the second direction D2. Then, the lower portion from the upper surface 12a1 of the first lower eave portion 12a of the capture portion 12 is formed without an undercut shape in the vertical direction.

Next, an operation in which the oil LO captured by the oil receiver 10 is led to the lubrication portion will be described. The oil LO stored in the bottom portion 11a is scooped up inside the casing 2 by the respective gears 7a to 7g disposed on the counter shaft 5 (see Fig. 2).

A part of the oil LO falling downward from the upper side of the capture portion 12 and a part of the oil LO falling down after flowing along the inner surface of the side wall of the casing 2 and reaching the protrusion portion 2a drop on the upper surface 12c1 of the first upper eave portion 12b. The oil LO which drops on the upper surface 12c1 of the first upper eave portion 12b flows toward one end of the second width direction H2 (the left direction) side of the first main body portion 12c along the upper surface 12c1 by the own weight as indicated by the solid arrow of Figs. 4 and 5. At this time, since the flow of the oil LO is rectified toward one end of the second width direction H2 (the left direction) side by the main body side wall portion 12d, the oil LO does not fall down from the front side and the rear side of the first main body portion 12c. Then, the oil LO which reaches one end of the second width direction H2 (the left direction) side of the first main body portion 12c falls along the first connection portion 12e or falls down from one end of the second width direction H2 (the left direction) side of the first main body portion 12c to reach the upper surface 12a1 of the first lower eave portion 12a. Then, the oil LO that reaches the upper surface 12a1 of the first lower eave portion 12a flows to one end of the second width direction H2 (the left direction) side of the first lower eave portion 12a along the upper surface 12a1 and reaches the bottom portion 11a along the inner surface of the first side wall portion 11b of the gutter portion 11.

Further, a part of the oil LO scattered upward from the lower side of the capture portion 12 adheres to a range of the lower surface 12c2 of the first upper eave portion 12b beyond the first lower eave portion 12a in the first width direction H1 (the right direction) due to the viscosity of the oil LO. The oil LO which adheres to the lower surface 12c2 of the first upper eave portion 12b flows to one end of the second width direction H2 (the left direction) side of the first main body portion 12c along the lower surface 12c2 by the own weight as indicated by the dashed arrow of Fig. 5 and falls along the first connection portion 12e or falls down from one end of the second width direction H2 (the left direction) side of the first main body portion 12c to reach the upper surface 12a1 of the first lower eave portion 12a. Then, the oil LO that reaches the upper surface 12a1 of the first lower eave portion 12a reaches the bottom portion 11a as described above.

Further, a part of the scooped oil LO also adheres to the main body side wall portion 12d and flows along the main body side wall portion 12d, the upper surface 12c1, or the lower surface 12c2 to reach the bottom portion 11a by the own weight as described above.

The oil LO which reaches the bottom portion 11a flows on the bottom portion 11a along the first direction D1 by the own weight. A part of the oil LO flowing along the bottom portion 11a is led downward from each oil outlet 11e to reach the first and second selection mechanisms 8a and 8b. Further, a part of the oil LO which is not led from each oil outlet 11e is led downward from the rear end portion of the gutter portion 11 to reach the bearings 9a and 9b through, for example, a passage (not illustrated) formed inside the casing 2.

Next, a method of manufacturing the oil receiver 10 will be described. The method of manufacturing the oil receiver 10is such that the gutter portion 11 and the capture portion 12 are integrally formed with each other by injection-molding thermoplastic resin. That is, the oil receiver 10 is a molded product which is formed by injection-molding thermoplastic resin using the die K. The thermoplastic resin is, for example, nylon. The die K includes a fixed die Kr, a movable die Km, and a slide die Ks. As illustrated in Fig. 7, the slide die Ks is provided only at a portion where the first main body portion 12c of the capture portion 12 is formed in the longitudinal direction of the oil receiver 10. Additionally, the die K illustrated in Fig. 7 shows a state where the die K is closed. Hereinafter, the die K will be described with reference to a portion illustrated in Fig. 7.

The fixed die Kr is mainly provided to form the outer side surface of the gutter portion 11. Specifically, a split surface with respect to the movable die Km is formed on the fixed die Kr toward the left direction from the point P1 of the upper left end of the second side wall portion 11c of the gutter portion 11. Further, the fixed die Kr is formed in a shape extending from the point P1 to the point P2 of the right end of the upper surface 12a1 along the shapes of the outer side surfaces of the second side wall portion 11c, the bottom portion 11a and the first side wall portion 11b, and the lower surface 12a2 of the first lower eave portion 12a. Then, a split surface with respect to the slide die Ks is formed on the fixed die Kr toward the right direction from the point P2. The shape of the oil receiver 10 is formed in a shape without an undercut shape as described above so that the oil receiver 10 can be taken out when the die K is opened.

The movable die Km is mainly provided to form the inner surface of the gutter portion 11 and the upper surface of the first upper eave portion 12b. Specifically, a split surface with respect to the fixed die Kr is formed on the movable die Km from the point P1 in the left direction. Further, the movable die Km is formed in a shape extending from the point P1 to the point P3 of the left end of the upper surface 12a1 of the first lower eave portion 12a along the inner surfaces of the second side wall portion 11c, the bottom portion 11a, and the first side wall portion 11b. A split surface with respect to the slide die Ks is formed on the movable die Km from the point P3 to the point P4 of the left lower end of the first main body portion 12c of the first upper eave portion 12b. Then, on the movable die Km, the shape for the left end of the first main body portion 12c is formed in the vertical direction from the point P4 and the shape to the point P5 for the right upper end of the first main body portion 12c is formed along the upper surface 12c1 of the first main body portion 12c. A split surface with respect to the slide die Ks is formed on the movable die Km to extend from the point P5 in the second direction D2. The movable die Km moves upward when the die K is opened. As described above, the shape of the oil receiver 10 is formed in a shape without an undercut shape so that the movable die Km is movable upward.

The slide die Ks is disposed at a portion where the capture portion 12 is formed. In the first embodiment, since the oil receiver 10 includes two capture portions 12, the die K includes two slide dies Ks. The slide die Ks is mainly provided to form the shapes of the lower surface 12c2 of the first upper eave portion 12b and the upper surface 12a1 of the first lower eave portion 12a. On the slide die Ks, a split surface with respect to the fixed die Kr is formed to extend from the point P2 in the right direction. On the slide die Ks, the shape to the point P3 is formed from the point P2 along the upper surface 12a1 of the first lower eave portion 12a, the shape to the point P4 is formed along the split surface with respect to the movable die Km, and the shape to the point P5 is formed from the point P4 along the shapes of the right end and the lower surface 12c2 of the first upper eave portion 12b. Further, a split surface with respect to the movable die Km is formed on the slide die Ks to extend from the point P5 in the second direction D2. The slide die Ks moves in the second direction D2 when the die K is opened. As described above, the shape of the oil receiver 10 is formed in a shape without an undercut shape so that the slide die Ks is movable in the second direction D2.

Further, the die K is formed only by the fixed die Kr and the movable die Km at the portions in the longitudinal direction of the oil receiver 10 (that is, the gutter portion 11 and the portions of the capture portion 12 except for the first main body portion 12c in the longitudinal direction) other than the portion provided with the first main body portion 12c of the capture portion 12 (see Fig. 7). Also, in this portion, the shape of the oil receiver 10 is formed in a shape without an undercut shape as described above so that the fixed die Kr and the movable die Km are movable in the vertical direction.

In this way, the oil receiver 10is formed such that the gutter portion 11 and the capture portion 12 are integrally formed by one set of the die K (the fixed die Kr, the movable die Km, and two slide dies Ks).

According to the first embodiment, the oil receiver 10 is the oil receiver 10 which is disposed inside the casing 2 of the transmission 1 of the vehicle and captures the oil LO scooped up by the rotation of the gears 7a to 7g provided inside the transmission 1. The oil receiver 10 includes the gutter portion 11 which is formed to have a U-shaped cross-section opened upward in the vertical direction and to extend in the first direction D1 and includes the bottom portion 11a on which the oil LO flows and the first side wall portion 11b and the second side wall portion 11c extending upward from both ends of the bottom portion 11a in the width direction H, and the capture portion 12 which captures the oil LO and leads the oil to the gutter portion 11. The capture portion 12 includes the first lower eave portion 12a which is formed in a plate shape including the upper surface 12a1 and the lower surface 12a2 and is formed to extend from the upper end portion of the first side wall portion 11b upward as it goes in the first width direction H1 that is a direction from the second side wall portion 11c toward the first side wall portion 11b in the width direction H, the first upper eave portion 12b which includes the first main body portion 12c formed in a plate shape including the upper surface 12c1 and the lower surface 12c2 and extending upward as it goes in the first width direction H1 and is formed so that one end of the second width direction H2 side of the first main body portion 12c is separated from the first lower eave portion 12a inside the vertical range VR1 above the upper surface 12a1 of the first lower eave portion 12a, the second width direction H2 being a direction opposite to the first width direction H1 of the width direction H, and one end of the first width direction H1 side of the first main body portion 12c is located in the first width direction H1 beyond the first lower eave portion 12a, and the first connection portion 12e which connects a part of an end of the second width direction H2 side of the first main body portion 12c of the first upper eave portion 12b to a part of the upper surface 12a1 of the first lower eave portion 12a.

Accordingly, a part of the oil LO falling downward from the upper side of the capture portion 12 is captured by the upper surface 12c1 of the first upper eave portion 12b, flows to one end of the second width direction H2 side of the first upper eave portion 12b along the upper surface 12c1 of the first upper eave portion 12b, falls along the first connection portion 12e or from one end of the second width direction H2 side of the first upper eave portion 12b to reach the upper surface 12a1 of the first lower eave portion 12a and is led from the upper surface 12a1 of the first lower eave portion 12a to the bottom portion 11a of the gutter portion 11. Further, a range of the lower surface 12c2 of the first upper eave portion 12b beyond the first lower eave portion 12a in the first width direction H1 captures a part of the oil LO scattered upward from the lower side of the capture portion 12. Since the lower surface 12c2 of the first upper eave portion 12b faces downward, the oil LO is efficiently captured compared to a case where a portion for capturing the oil LO is provided to face the lateral side as in the related art. The oil LO which is captured by the lower surface 12c2 of the first upper eave portion 12b flows to one end of the second width direction H2 side of the first upper eave portion 12b along the lower surface 12c2 of the first upper eave portion 12b and reaches the upper surface 12a1 of the first lower eave portion 12a as described above so as to be led to the bottom portion 11a of the gutter portion 11. Then, since the first lower eave portion 12a and the first upper eave portion 12b are formed in a plate shape, the capture portion 12 can have a relatively simple configuration. Thus, the oil receiver 10 can efficiently capture a part of the oil LO falling downward from the upper side of the oil receiver 10 and a part of the oil LO scattered upward from the lower side of the oil receiver 10 with a simple configuration.

The method of manufacturing the oil receiver 10 is such that the gutter portion 11 and the capture portion 12 are integrally formed with each other by injection-molding thermoplastic resin.

Accordingly, the oil receiver 10 can be constructed in one piece since the gutter portion 11 and the capture portion 12 are integrally formed with each other. Further, since the oil receiver 10 is formed of thermoplastic resin, the oil receiver 10 can be formed by one set of the die K. Thus, it is possible to decrease the number of components of the oil receiver 10 and the number of sets of the die K compared to a case where the gutter portion 11 and the capture portion 12 are formed as separate members. Thus, it is possible to realize a decrease in cost of the oil receiver 10.

### (Second Embodiment)

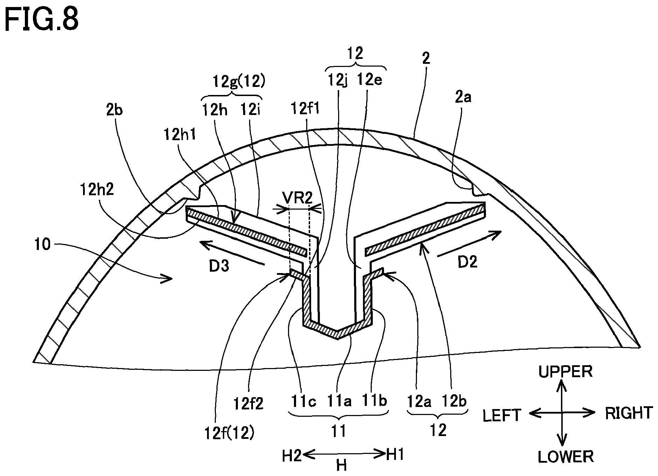

Next, a second embodiment of the oil receiver 10 according to the invention will be described by mainly focusing on a difference from the first embodiment. In the above-described first embodiment, the capture portion 12 is formed on the first width direction H1 side of the gutter portion 11, but in the second embodiment, the capture portion 12 is formed at both sides of the width direction H. Specifically, as illustrated in Fig. 8, the capture portion 12 further includes a second lower eave portion 12f, a second upper eave portion 12g, and a second connection portion 12j.

The second lower eave portion 12f has a shape symmetrical to the first lower eave portion 12a in the width direction H (the horizontal direction) of the bottom portion 11a. Specifically, the second lower eave portion 12f is formed in a plate shape including an upper surface 12f1 and a lower surface 12f2 and is formed to extend from an upper end portion of the second side wall portion 11c in the third direction D3 (in the second embodiment, the oblique left upward direction) which moves upward as it goes in the second width direction H2. Further, the length of the second lower eave portion 12f in the width direction H (the horizontal direction) of the bottom portion 11a is so set that one end of the first width direction H1 (the right direction) side of a later-described second upper eave portion 12g is located inside the vertical range VR2 above the upper surface 12f1 of the second lower eave portion 12f in a state where the inclination direction of the vehicle is the second inclination direction (in the second embodiment, the left direction) that is a direction in which the second side wall portion 11c is located at the lower side in relation to the first side wall portion 11b in the width direction H (the horizontal direction) of the bottom portion 11a and the inclination angle of the vehicle is the maximum inclination angle in the second inclination direction. Further, in this state, it is formed so that one left end of the second lower eave portion 12f is located at the upper side in relation to one right end thereof.

The second upper eave portion 12g has a shape symmetrical to the first upper eave portion 12b in the width direction H (the horizontal direction) of the bottom portion 11a. The second upper eave portion 12g includes a second main body portion 12h which is formed in a plate shape including an upper surface 12h1 and a lower surface 12h2 and extending upward as it goes in the second width direction H2 and is formed so that one end of the second main body portion 12h of the first width direction H1 side is separated from the second lower eave portion 12f inside the vertical range VR2 above the upper surface 12f1 of the second lower eave portion 12f and one end of the second main body portion 12h of the second width direction H2 side is located beyond the second lower eave portion 12f in the second width direction H2. Further, the second main body portion 12h of the second upper eave portion 12g is formed to extend in the third direction D3 in parallel to the second lower eave portion 12f. In the second embodiment, one end portion (the lower end portion) of the second main body portion 12h of the first width direction H1 (the right direction) side is separated from the second lower eave portion 12f inside the vertical range VR2 above the upper surface 12f1 of the second lower eave portion 12f. Further, in a state where the inclination direction of the vehicle is the second inclination direction (in the second embodiment, the left direction) and the inclination angle of the vehicle is the maximum inclination angle in the second inclination direction, one left end of the second upper eave portion 12g is formed to be located at the upper side in relation to one right end thereof. Further, the front end and the rear end of the second main body portion 12h are respectively provided with the main body side wall portions 12i extending upward and downward.

The second connection portion 12j has a shape symmetrical to the first connection portion 12e in the width direction H (the horizontal direction) of the bottom portion 11a. The second connection portion 12j is provided to connect a part of an end of the first width direction H1 side of the second main body portion 12h of the second upper eave portion 12g to a part of the upper surface 12f1 of the second lower eave portion 12f.

Additionally, in the case of the second embodiment, the oil receiver 10 is attached to the substantially center of upper area in the casing 2. Further, as illustrated in Fig. 8, the casing 2 is further provided with a protrusion portion 2b on the second width direction H2 (the left direction) upper side of the second upper eave portion 12g. Further, the die K is further provided with the slide die capable of forming the shapes of the second upper eave portion 12g and the second lower eave portion 12f and sliding in the third direction D3 compared to the case of the first embodiment.

According to the second embodiment, the capture portion 12 further includes the second lower eave portion 12f which is formed in a plate shape including the upper surface 12f1 and the lower surface 12f2 and is formed to extend upward from the upper end portion of the second side wall portion 11c as it goes in the second width direction H2, the second upper eave portion 12g which includes the second main body portion 12h having a plate shape including the upper surface 12h1 and the lower surface 12h2 and extending upward as it goes in the second width direction H2 and is formed so that one end of the first width direction H1 side of the second main body portion 12h is separated from the second lower eave portion 12f inside the vertical range VR2 above the upper surface 12f1 of the second lower eave portion 12f and one end of the second width direction H2 side of the second main body portion 12h is located in the second width direction H2 beyond the second lower eave portion 12f, and the second connection portion 12j which connects a part of an end of the first width direction H1 side of the second main body portion 12h of the second upper eave portion 12g to a part of the upper surface 12f1 of the second lower eave portion 12f.

Accordingly, the oil receiver 10 captures a part of the oil LO scattered inside the casing 2 at both sides of the width direction H of the gutter portion 11. Thus, the oil receiver 10 can further efficiently capture the oil LO since the amount of the captured oil LO can be increased compared to a case where the oil LO is captured at one side of the width direction H of the gutter portion 11.

Additionally, in the above-described embodiments, an example of the oil receiver has been described. However, the invention is not limited thereto and other configurations can be also employed. For example, in the above-described first embodiment, the capture portion 12 is formed at the upper end portion of the first side wall portion 11b, but instead of this configuration, the capture portion may be formed at the upper end portion of the second side wall portion 11c. In this case, the first lower eave portion 12a is a portion which is formed in a plate shape including the upper surface 12a1 and the lower surface 12a2 and is formed to extend upward from the upper end portion of the second side wall portion 11c as it goes in the first width direction H1 (in this case, the left direction) which is a direction from the first side wall portion 11b toward the second side wall portion 11c in the width direction H (the horizontal direction) of the bottom portion 11a. Further, in this case, the first main body portion 12c of the first upper eave portion 12b has a plate shape including the upper surface 12c1 and the lower surface 12c2 and extending upward as it goes in the first width direction H1 (in this case, the left direction). The first main body portion 12c is formed so that one end of the second width direction H2 (in this case, the right direction) side opposite to the first width direction H1 side in the width direction H of the first main body portion 12c is separated from the first lower eave portion 12a inside the vertical range VR1 above the upper surface 12a1 of the first lower eave portion 12a and one end of the first width direction H1 side of the first main body portion 12c is located in the first width direction H1 side beyond the first lower eave portion 12a.

In this way, the capture portion 12 includes the first lower eave portion 12a which is formed in a plate shape including the upper surface 12a1 and the lower surface 12a2 and is formed to extend upward from an upper end portion of one of the first side wall portion 11b and the second side wall portion 11c as it goes in the first width direction H1 that is a direction from the other of the first side wall portion 11b and the second side wall portion 11c to one thereof in the width direction H of the bottom portion 11a, the first upper eave portion 12b which includes the first main body portion 12c formed in a plate shape including the upper surface 12c1 and the lower surface 12c2 and extending upward as it goes in the first width direction H1 and is formed so that one end of the second width direction H2 side opposite to the first width direction H1 side in the width direction H of the bottom portion 11a of the first main body portion 12c is separated from the first lower eave portion 12a inside the vertical range VR1 above the upper surface 12a1 of the first lower eave portion 12a and one end of the first width direction H1 side of the first main body portion 12c is located in the first width direction H1 beyond the first lower eave portion 12a, and the first connection portion 12e which connects a part of an end of the second width direction H2 side of the first main body portion 12c of the first upper eave portion 12b to a part of the upper surface 12a1 of the first lower eave portion 12a.

Further, in a state where the capture portion 12 is formed at both sides of the width direction H of the bottom portion 11a, the capture portion 12 includes the second lower eave portion 12f which is formed in a plate shape including the upper surface 12f1 and the lower surface 12f2 and is formed to extend upward from an upper end portion of the other of the first side wall portion 11b and the second side wall portion 11c as it goes in the second width direction H2, the second upper eave portion 12g which includes the second main body portion 12h formed in a plate shape including the upper surface 12h1 and the lower surface 12h2 and extending upward as it goes in the second width direction H2 and is formed so that one end of the first width direction H1 side of the second main body portion 12h is separated from the second lower eave portion 12f inside the vertical range VR2 above the upper surface 12f1 of the second lower eave portion 12f and one end of the second width direction H2 of the second main body portion 12h is located in the second width direction H2 beyond the second lower eave portion 12f, and the second connection portion 12j which connects a part of an end of the first width direction H1 side of the second main body portion 12h of the second upper eave portion 12g to a part of the upper surface 12f1 of the second lower eave portion 12f.

Further, in the above-described first embodiment, in a state where the inclination direction of the vehicle is the first inclination direction and the inclination angle of the vehicle is the maximum inclination angle θmax in the first inclination direction, the length of the bottom portion 11a of the first lower eave portion 12a in the width direction H may be set to the minimum length in which one end of the second width direction H2 side of the first upper eave portion 12b is located inside the vertical range VR1 above the upper surface 12a1 of the first lower eave portion 12a.

Accordingly, the length of the first lower eave portion 12a is set to the minimum length in which the oil LO can be captured. Thus, the oil LO can be more efficiently captured since the amount of the oil LO captured by the lower surface 12c2 of the first upper eave portion 12b can be increased compared to a case where the length of the first lower eave portion 12a is longer than the minimum length. Further, similarly to the first lower eave portion 12a, also regarding to the second lower eave portion 12f in the above-described second embodiment, the length of the width direction H of the bottom portion 11a of the second lower eave portion 12f may be set to the minimum length in which one end of the first width direction H1 of the second upper eave portion 12g is located inside the vertical range VR2 above the upper surface 12f1 of the second lower eave portion 12f when the inclination direction of the vehicle is the second inclination direction and the inclination angle of the vehicle is the maximum inclination angle of the second inclination direction.

Further, in the above-described embodiments, the transmission 1 is a manual transmission (MT), but the invention may be also applied to automated manual transmission (AMT) or dual clutch transmission (DCT).

Further, the number of the oil receivers 10 attached to the inside of the casing 2, the number or positions of the gutter portions 11 and the capture portions 12, the shapes of the upper eave portions 12b and 12g and the lower eave portions 12a and 12f, the positional relationship between the first upper eave portion 12b and the first lower eave portion 12a, the positional relationship between the second upper eave portion 12g and the second lower eave portion 12f, and the number and positions of the connection portions 12e and 12j may be changed without departing from the scope of the invention.

### Reference Signs List

- 1: Transmission
- 2: Casing
- 7a: Reverse driven gear (gear)
- 7b, 7c, 7d, 7e, 7f, 7g: Driven gear (gear)
- 10: Oil receiver
- 11: Gutter portion
- 11a: Bottom portion
- 11b: First side wall portion
- 11c: Second side wall portion
- 12: Capture portion
- 12a: First lower eave portion
- 12a1: Upper surface
- 12a2: Lower surface
- 12b: First upper eave portion
- 12c: First main body portion
- 12c1: Upper surface
- 12c2: Lower surface
- 12d: Main body side wall portion
- 12e: First connection portion
- 12f: Second lower eave portion
- 12f1: Upper surface
- 12f2: Lower surface
- 12g: Second upper eave portion
- 12h: Second main body portion
- 12h1: Upper surface
- 12h2: Lower surface
- 12i: Main body side wall portion
- 12j: Second connection portion
- H: Width direction
- H1: First width direction
- H2: Second width direction
- LO: Oil
- θmax: Maximum inclination angle

## Claims

1. An oil receiver which is disposed inside a casing of a transmission of a vehicle and captures oil scooped up by the rotation of a gear provided inside the transmission, the oil receiver comprising:
a gutter portion which is formed to have a U-shaped cross-section opened upward in a vertical direction and to extend in a first direction and includes a bottom portion for allowing the oil to flow thereon and a first side wall portion and a second side wall portion extending upward from both ends of the bottom portion in a width direction; and
a capture portion which captures the oil and leads the oil to the gutter portion,
wherein the capture portion includes:
a first lower eave portion which is formed in a plate shape including an upper surface and a lower surface and is formed to extend upward from an upper end portion of one of the first side wall portion and the second side wall portion as it goes in a first width direction that is a direction from the other of the first side wall portion and the second side wall portion to one thereof in the width direction;
a first upper eave portion which includes a first main body portion formed in a plate shape including an upper surface and a lower surface and extending upward as it goes in the first width direction and is formed so that one end of a second width direction side of the first main body portion is separated from the first lower eave portion inside a vertical range above the upper surface of the first lower eave portion, the second width direction being a direction opposite to the first width direction in the width direction, and one end of the first width direction side of the first main body portion is located in the first width direction beyond the first lower eave portion; and
a first connection portion which connects a part of the one end of the second width direction side of the first main body portion of the first upper eave portion to a part of the upper surface of the first lower eave portion.

2. The oil receiver according to claim 1,
wherein a length of the width direction of the first lower eave portion is set to a minimum length in which one end of the second width direction side of the first upper eave portion is located inside the vertical range above the upper surface of the first lower eave portion in a state where an inclination direction of the vehicle is a first inclination direction that is a direction in which one of the first side wall portion and the second side wall portion is located at the lower side in relation to the other thereof in the width direction and the inclination angle of the vehicle is a maximum inclination angle in the first inclination direction.

3. The oil receiver according to claim 1 or 2,
wherein the capture portion further includes:
a second lower eave portion which is formed in a plate shape including an upper surface and a lower surface and is formed to extend upward from an upper end portion of the other of the first side wall portion and the second side wall portion as it goes in the second width direction;
a second upper eave portion which includes a second main body portion formed in a plate shape including an upper surface and a lower surface and extending upward as it goes in the second width direction and is formed so that one end of the first width direction side of the second main body portion is separated from the second lower eave portion inside the vertical range above the upper surface of the second lower eave portion and one end of the second width direction side of the second main body portion is located in the second width direction beyond the second lower eave portion; and
a second connection portion which connects a part of the one end of the first width direction side of the second main body portion of the second upper eave portion to a part of the upper surface of the second lower eave portion.

4. A method of manufacturing the oil receiver according to any one of claims 1 to 3,
wherein the gutter portion and the capture portion are integrally formed with each other by injection-molding thermoplastic resin.
